# EUROPÄISCHE PATENTSCHRIFT

(11) **EP 0 814 981 B1**
(45) Veröffentlichungstag und Bekanntmachung des Hinweises auf die Patenterteilung: **16.05.2001**
(21) Anmeldenummer: 96903910.6
(22) Anmeldetag: 28.02.1996
(51) Int. Cl.: B60T 1/06

(54) **VERFAHREN UND VORRICHTUNG ZUR STEUERUNG BZW. REGELUNG DER BREMSANLAGE EINES FAHRZEUGS**
METHOD AND DEVICE FOR CONTROLLING A VEHICLE BRAKE SYSTEM
METHODE ET EQUIPEMENT DE COMMANDE ET DE REGULATION DU SYSTEME DE FREINS D'UN VEHICULE

(30) Priorität: 23.03.1995 DE 19510525
(43) Veröffentlichungstag der Anmeldung: 07.01.1998
(73) Patentinhaber: ROBERT BOSCH GMBH, 70442 Stuttgart (DE)
(72) Erfinder: SCHRAMM, Dieter, D-70469 Stuttgart (DE); KELLER, Frieder, D-75015 Bretten (DE); KELLNER, Andreas, D-71696 Möglingen (DE); BLESSING, Peter, D-74078 Heilbronn (DE)
(86) Internationale Anmeldenummer: DE9600331
(87) Internationale Veröffentlichungsnummer: WO9629218

(56) Entgegenhaltungen:
- EP-A- 0 403 792
- EP-A- 0 519 287
- DE-C- 4 338 064
- US-A- 4 784 442
- US-A- 5 230 549

## Beschreibung

### Stand der Technik

Die Erfindung betrifft ein Verfahren und eine Vorrichtung zur Steuerung bzw. Regelung der Bremsanlage eines Fahrzeugs gemäß den Oberbegriffen der unabhängigen Patentansprüche.

Ein derartiges Verfahren bzw. eine derartige Vorrichtung ist aus der US 5,230,549 bekannt. Dort wird eine Bremsanlage mit einer elektronischen Steuereinheit vorgeschlagen, welche die Radbremsen abhängig von der Betätigung eines Bedienelements (Bremspedal) durch den Fahrer betätigt. Die Bremspedalbetätigung wird sowohl durch einen ersten Sensor, welcher die Betätigungskraft erfaßt als auch durch einen zweiten Sensor, welcher den vom Pedal zurückgelegten Weg erfaßt, ermittelt. Zur Steuerung bzw. Regelung der Bremsanlage wird aus einer der Meßgrößen eine Größe für den Fahrerbremswunsch gebildet, insbesondere einen Sollwert für einen die Bremsbetätigung durchführenden Regelkreis. Die Auswahl der Meßgröße, ob Betätigungskraft oder Pedalweg, wird nach Maßgabe von Betriebsgrößen wie Verzögerung oder von den Meßgrößen selbst durchgeführt. Da die Bremswirkung der Bremsanlage bei diesem bekannten System abhängig vom ermittelten Bremswunsch ist, kann im Fehlerfall der Bremswunscherfassung, insbesondere im Fehlerfall der Betätigungserfassung oder der elektronischen Steuereinheit selbst, eine ungewollte Bremswirkung eingestellt werden. Maßnahmen zur Fehlererkennung oder zur Steuerung der Bremsanlage im Fehlerfall werden in der US 5,230,549 nicht beschrieben.

Es ist daher Aufgabe der Erfindung, Maßnahmen anzugeben, welche ein Steuer- bzw. Regelsystem einer Bremsanlage eines Fahrzeugs mit Blick auf mögliche Fehlerzustände im Bereich der Bremswunscherfassung verbessern.

Dies wird durch die Merkmale der unabhängigen Patentansprüche erreicht.

Das US-Patent 4,784,442 zeigt die Erfassung der Bremspedalbetätigung durch zwei Meßeinrichtungen, deren Signale zwei voneinander unabhängigen Schaltkreisen zugeführt werden. Die gefilterten und digitalisierten Signale werden nach verschiedenen Prinzipien auf Plausibilität überprüft, um Fehler zu erkennen. Dabei wird ein ausgewähltes Signal als Betätigungssignal zur Weiterverarbeitung ausgegeben, solange es fehlerfrei ist. Die Weiterverarbeitung dieses Signals zur Umrechnung in Bremswunsch- und/oder Sollwerte wird nicht beschrieben.

Die EP-A 403 792 zeigt die Steuerung einer Bremsanlage, wobei zwei elektronische Steuereinrichtungen, denen je ein Bremskreis zugeordnet ist, vorgesehen sind. Die Steuereinrichtungen erfassen die Betätigungssignale des Bremspedals und prüfen diese auf Plausibiltät. Erkennt eine Steuereinrichtung bei fehlerfreien Signalen eine gewollte Bremsung, steuert siedie Drucksteuerventile ihres Bremskreis an. Eine fehlertolerante Vorgehensweise bei der Verarbeitung der Betätigungssignale zu Bremswunsch und/oder Sollwerte wird nicht beschrieben.

### Vorteile der Erfindung

Besonders vorteilhaft ist der Aufbau des Steuer- bzw. Regelsystems aus wenigstens zwei voneinander unabhängigen Mikrorechnern, wobei in einem Mikrorechner der Bremswunsch und/oder die Sollwerte aus den Betätigungssignalen ermittelt wird, in wenigstens einem weiteren der Mikrorechner die Berechnungen zur Bremswunsch- und/oder Sollwert-ermittlung redundant in zwei voneinander unabhängigen Softwarekanälen errechnet wird, und aus den Ergebnissen Bremswunsch und/oder Sollwerte zur Steuerung der Radbremsen gebildet werden. Dadurch wird zur Ermittlung des Bremswunsches ein redundantes Meßsystem mit redundanten Verarbeitungskanälen bereitgestellt.

In vorteilhafter Weise ergibt sich dabei die Möglichkeit, den aufgetretenen Fehler zu lokalisieren und die Steuerung bzw. Regelung der Bremsanlage ohne Einschränkung auf der Basis der fehlerfrei arbeitenden Elemente fortzuführen. Damit ist eine erhebliche Steigerung der Verfügbarkeit der Bremsanlage verbunden.

Die erfindungsgemäßen Maßnahmen werden in vorteilhafter Weise in Verbindung mit allen denkbaren Meßprinzipien zur Pedalkraft- und Pedalwegsensierung (siehe Patentanspruch 4) sowie bei allen bekannten Bremsanlagen, ob hydraulisch, pneumatisch oder elektrisch, mit oder ohne Notbremskreise angewendet.

Es wird unter Verwendung von drei Sensoren gemäß den Patentansprüchen 4 und 5 zur Erfassung der Pedalbetätigung, welche vorzugsweise jeweils nach anderen Meßprinzipien arbeiten, die Betriebssicherheit der Bremsanlage sichergestellt und Fehlerzustände im Bereich der Bremswunschbestimmung zuverlässig erkannt.

Eine ggf. einfach aufgebaute Überwachungskomponente gemäß Patentanspruch 5 mit geringen Genauigkeitsanforderung stellt die Lokalisierung eines fehlerhaften Kanals sicher.

Besonders vorteilhaft ist die Bildung von Ersatzwerten gemäß Patentanspruch 8 für den Bremswunsch in Betriebsbereichen, in denen ein Fehlerzustand nicht lokalisierbar ist.

Die erfindungsgemäßen Maßnahmen werden ferner in vorteilhafter Weise in Verbindung mit einer Bremskraft-, Fahrzeugverzögerungs-, Bremsmoment-, Bremsleistungs-, Bremsdruckvorgabe, etc., zur Bremsensteuerung bzw. -regelung, das heißt bei allen die Bremswirkung repräsentierenden Vorgabengrößen, angewendet.

Weitere Vorteile ergeben sich aus der nachfolgenden Beschreibung von Ausführungsbeispielen bzw. aus den abhängigen Patentansprüchen.

### Zeichnung

Die Erfindung wird nachstehend anhand der in der Zeichnung dargestellten Ausführungsformen näher erläutert. Dabei sind in den Figuren 1 und 2 anhand von Blockschaltbildern zwei Ausführungsformen zur Ermittlung des Bremswunsches dargestellt. Figur 3 zeigt ein Blockschaltbild eines bevorzugten Aufbaus des Rechnersystems. In den Figuren 4 und 5 sind Diagramme über grundlegende Zusammenhänge der Pedal- und Bremswunscherfassung dargestellt, auf deren Basis die erfindungsgemäßen Maßnahmen arbeiten. Figur 6 und 7 zeigen Maßnahmen zur Fehlererkennung und Bremswunschermittlung anhand von Flußdiagrammen, während in Figur 8 ein erstes Ausführungsbeispiel zur Lokalisierung eines Fehlerzustands dargestellt ist. Die Figuren 8, 9 und 10 zeigen anhand von Diagrammen bzw. eines Flußdiagramms eine zweite Ausführungsform zur Lokalisierung der Fehlerzustände. Eine dritte Ausführungsformm ist anhand des Diagramms nach Figur 11 sowie des Flußdiagramms nach Figur 12 dargestellt.

### Beschreibung von Ausführungsbeispielen

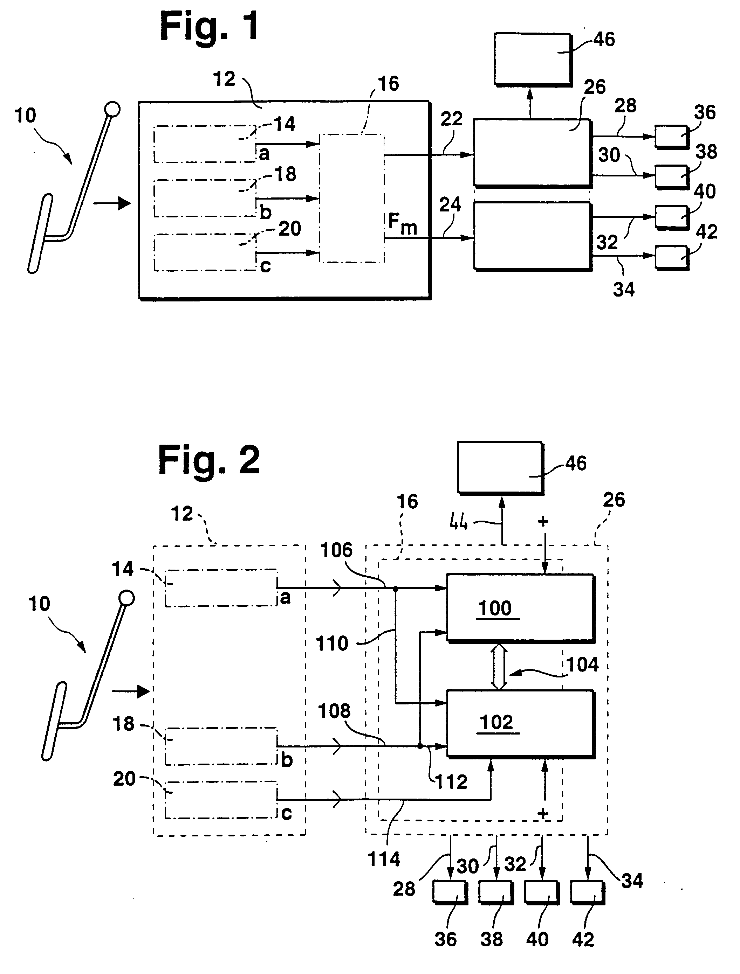

Figur 1 zeigt ein erstes Ausführungsbeispiel für den prinzipiellen Aufbau der Pedalerfassungseinheit. Ein Bremspedal 10 steht mit der Pedalerfassungseinheit 12 in Wirkverbindung. Diese besteht aus einer ersten Meßeinrichtung 14, die ein erstes die Bremspedalbetätigung charakterisierendes Meßsignal a an eine Verarbeitungseinheit 16 abgibt. Ferner umfaßt die Pedalerfassungseinheit 12 eine zweite Meßeinrichtung 18, die ebenfalls ein die Pedalbetätigung charakterisierendes Meßsignal b an die Verarbeitungseinheit 16 abgibt. Ferner ist in einem Ausführungsbeispiel eine Überwachungskomponente 20 vorgesehen, welche ein ebenfalls die Pedalbetätigung charakterisierendes Signal c an die Verarbeitungseinheit 16 abgibt. Zumindest die Meßeinrichtungen a und b sind unabhängig voneinander realisiert. Besonders vorteilhaft hat sich eine sogenannte diversitäre Realisierung erwiesen. Dabei arbeiten die Meßeinrichtungen nach unterschiedlichen Meßprinzipien. Bei einer bevorzugten Realisierung erfaßt die Meßeinrichtung a den Pedalweg s, die Meßeinrichtung b, die Betätigungskraft FP. In einer vorteilhaften weiteren Ausgestaltung erfaßt die Meßeinrichtung a den Pedalwinkel α, die Meßeinrichtung b den Pedaldruck p. Im bevorzugten Ausführungsbespiel werden die Meßeinrichtungen a und b zudem von getrennten Energiequellen versorgt. Die Überwachungskomponente c liefert zusätzliche Informationen zur Überprüfung der in den Meßeinrichtungen a und b gemessenen Meßwerte. Im bevorzugten Ausführungsbeispiel enthält die Überwachungskomponente eine zusätzliche, unabhängige Meßeinrichtung c, die eine die Pedalbetätigung repräsentierende Meßgröße (beispielsweise Pedalweg s oder Pedalkraft FP) erfaßt. Diese Messung erfolgt dabei im bevorzugten Ausführungsbeispiel mit reduzierter Genauigkeit im Vergleich zu der Genauigkeit der Meßeinrichtung a und b. Eine Erfassung derselben physikalischen Größe mit unterschiedlichem Meßprinzip ist ebenfalls möglich.

Von der Verarbeitungseinheit 16 führen in bevorzugten Ausführungsbeispiel unabhängige Kommunikationspfade, vorzugsweise zwei Leitungen 22 und 24, auf ein Rechnersystem 26. Über die Leitungen 22 und 24 wird ein aufgrund der Pedalbetätigung ermittelte Bremswunsch des Fahrers an das Rechnersystem 26 übertragen. Dieser Bremswunsch stellt ein Maß für die erwünschte Bremswirkung der Bremsanlage dar und repräsentiert im bevorzugten Ausführungsbeispiel die Bremskraft Fm. Neben der Bremskraft werden in anderen vorteilhaften Ausführungsbeispielen eine das Bremsmoment, den Bremsdruck, die Fahrzeugverzögerung, die Bremsleistung, etc. repräsentierende Größe in der Verarbeitungseinheit aus den Betätigungsignalen ermittelt und dem Rechnersystem 26 zur Verfügung gestellt.

Das Rechnersystem 26 setzt den ermittelten Bremswunschwert unter Berücksichtung der gewünschten Bremskraftverteilung, des Belagverschleißes, den Achslasten, etc. in Sollwerte für die Radbremsen um. Diese Sollwerte repräsentieren im bevorzugten Ausführungsbeispiel den an den Radbremsen einzustellenden Bremsdruck, in anderen vorteilhaften Ausführungsbeispielen die einzustellende Bremskraft, das einzustellende Bremsmoment, etc.. Über die Leitungen 28, 30, 32 und 34 gibt das Rechnersystem 26 die im bevorzugten Ausführungsbeispiel radindividuellen Sollwerte bzw. Ansteuersignale zur Einstellung dieser Sollwerte an die Stellelementet 36, 38, 40 und 42 der Radbremsen ab. Über eine Leitung 44 ist das Rechensystem 26 mit einer Warneinrichtung 46 verbunden, die dem Fahrer einen Fehlerzustand im Bereich der Bremsanlage anzeigt.

In einem weiteren vorteilhaften Ausführungsbeispiel ist vorgesehen, die Verarbeitungseinheit 16 in das Rechnersystem 26 zu integrieren. Dies ist in Figur 2 dargestellt. In diesem Fall werden dem Rechnersystem 26 die Signale a, b und c der Pedalerfassungseinheit 12 über entsprechende Leitungen zugeführt.

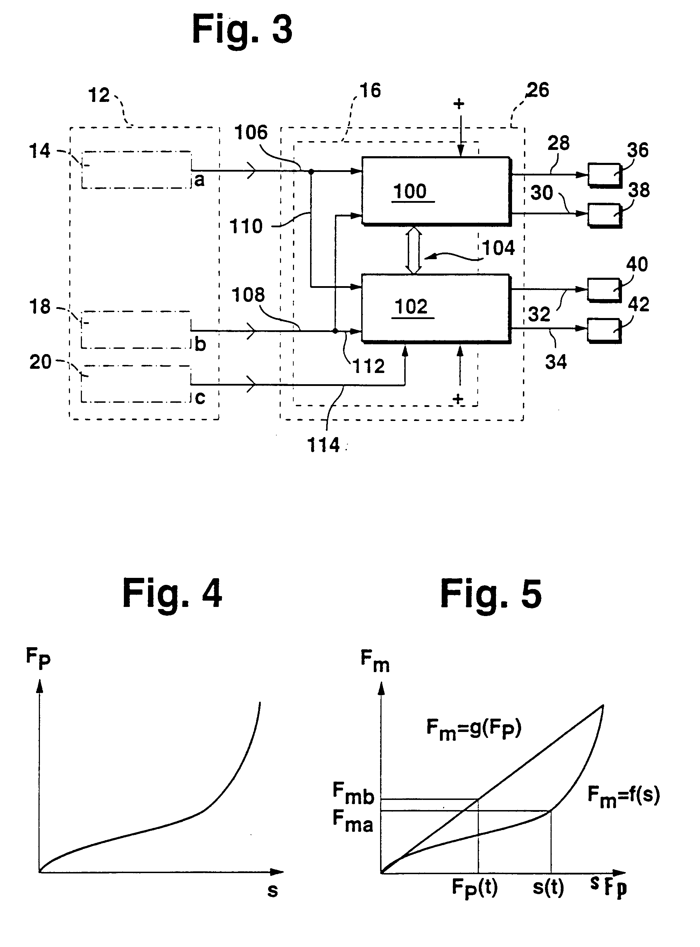

Eine bevorzugten Ausführung der Verarbeitungseinheit 16 bzw. des Rechnersystems 26 ist in Figur 3 dargestellt. Das Rechnersystem 26 besteht dabei aus zwei Mikrorechnern 100 und 102, welche über ein Kommunikationssystem 104 Informationen und Befehle austauschen. Der Mikrorechner 100 ist dabei im bevorzugten Ausführungsbeispiel an eine erste Energiequelle E1, der Mikrorechner 102 an eine zweite Energiequelle E2 angeschlossen, die voneinander unabhängig sind. Über eine Leitung 106 wird dem Mikrorechner 100 das Signal a von der Meßeinrichtung 14, über eine Leitung 108 das Signal b der Meßeinrichtung 18 zugeführt. Dem Mikrorechner 102 wird über eine von der Leitung 106 abzweigende Leitung 110 das Signal a, über eine von der Leitung 108 abzweigende Leitung 112 das Signal b zugeführt. Ferner wird dem Mikrorechner 102 über die Leitung 114 das Signal c der Überwachungskomponente 20 zugeführt. Die Mikrorechner 100 und 102 weisen ferner Ausgangsleitungen 28 bis 34 zur Ansteuerung der Stellemente 36 bis 42 auf. Dabei ist wesentlich, daß das Rechensystem 26 zwei unterschiedliche Verarbeitungskanäle aufweist (entsprechend den Bremskreisen).

Die beiden Mikrorechner kommunizieren miteinander über das Kommunikationssystem 104. Die Information der Überwachungskomponente wird in der Regel nur einem Mikrorechner zugeführt, der sie über das Kommunikationssystem dem zweiten weiterleitet. Beide Mikrorechner bearbeiten unabhängig voneinander die im folgenden dargestellten Funktionen zur Fehlererkennung und Bremswunsch- bzw. Sollwertbestimmung. Dabei wird im bevorzugten Ausführungsbeispiel in mindestens einem Mikrorechner die Berechnungen doppelt in unabhängigen Programmbereichen durchgeführt. Die jeweiligen Berechnungsergebnisse werden über das Kommunikationssystem 104 unter den Rechnern ausgetauscht. Jedem Mikrorechner liegen somit mindestens drei Berechnungsergebnisse bezüglich Fehlerzustand und/oder Sollwert bzw. Bremswunsch vor. Aus diesen drei Berechnungsergebnissen ermittelt im Falle des Ausführungsbeispieles nach Figur 1 jeder der Mikrorechner beispielsweise einen Bremswunschwert Fm und übermittelt ihn unabhängig vom anderen auf redundanten Kanälen (Leitungen 22 und 24) dem nachfolgenden Rechnersystem. Im Ausführungsbeispiel nach Figur 2 werden die von den beiden Mikrorechnern ermittelten Bremswünsche erneut über das Kommunikationssystem 104 ausgetauscht und die radindividuellen Sollwerte sowie ggf. die Berechnung der Regelung im Mikrorechner 100 durchgeführt. Entsprechend wird mit Informationen über einen vorliegenden Fehlerzustand und bezüglich Maßnahmen im FGehlerzustand vorgegangen.

Selbstverständlich weisen die Mikrorechner aus Sicherheitsgründen Selbsttests auf. Sie nehmen den Austausch von Fehlerflags, Programmzuständen und Teilergebnissen über die Kommunikationssysteme vor. Beim Auftreten von Fehlern bzw. nicht konsistenten Rechenergebnissen wird der auf die nachfolgende Weise ermittelte fehlerhafte Kanal abgeschaltet und ein Fehlerflag gesetzt.

Im Ausführungsbeispiel nach Figur 1 überträgt die Verarbeitungseinheit 16 Bremswunschwerte Fm zum nachfolgenden Rechnersystem fehlersicher innerhalb vorgegebener Fehlertoleranzzeiten. Zudem bearbeitet sie die Kommunikation mit dem Rechnersystem. Dazu werden dem Rechnersystem die möglicherweise ermittelten Fehlerflags der Pedalerfassungseinheit übermittelt. Das dabei verwendete Kommunikationssystem ist vorzugsweise redundant ausgeführt und verfügt über Fehlererkennungsmechanismen.

Zur Fehlererkennung wird der durch die Wahl der erfaßten Meßgrößen und die Mechanik der Pedalerfassungseinheit vorgegebene Zusammenhang zwischen den Sensorsignalen a und b ausgenutzt. Im bevorzugten Ausführungsbeispiel repräsentiert das Signal a den Pedalweg s, das Signal b die Pedalkraft FP. Im bevorzugten Ausführungsbeispiel weisen diese den in Figur 4 dargestellten Zusammenhang auf. Zur Bremswunsch- bzw. Sollwertermittlung wird in der Verarbeitungseinheit 16 bzw. im Rechnersystem 26 aus den gemessenen Größen die gewünschte Bremskraft Fm auf den Fahrzeugschwerpunkt berechnet. Dies erfolgt nach Maßgabe vorgewählter funktionaler Zusammenhänge, die in Figur 5 dargestellt sind. Die Festlegung des funktionalen Zusammenhangs zwischen Pedalweg s und Bremskraft Fm wird nach Komfortgesichtspunkten festgelegt. Entsprechend wird der Zusammenhang zwischen Bremskraft Fm und Pedalkraft FP festgelegt.

Die Bremskraft Fm wird aus beiden Signalen unabhängig voneinander berechnet. Es werden auf diese Weise die Bremskräfte Fma und Fmb bestimmt. Stimmen diese Bremskraftgrößen innerhalb eines vorgegebenen, vorzugsweise betriebspunktabhängigen Toleranzbereichs überein, wird die ermittelte Bremskraft Fm als Bremswunsch bzw. Sollwert für die Bestimmung der Führungsgröße für die radindividuellen Bremsbetätigungen verwendet. Wird durch Überschreiten des Toleranzbandes eine Inkonsistenz der Meßwerte erkannt, so sind Maßnahmen zur Lokalisierung des Fehlers einzuleiten und das fehlerhafte Signal bzw. der auf der Basis des fehlerhaften Signals berechnete Bremswunsch von der Bestimmung der Führungsgrößen auszuschließen.

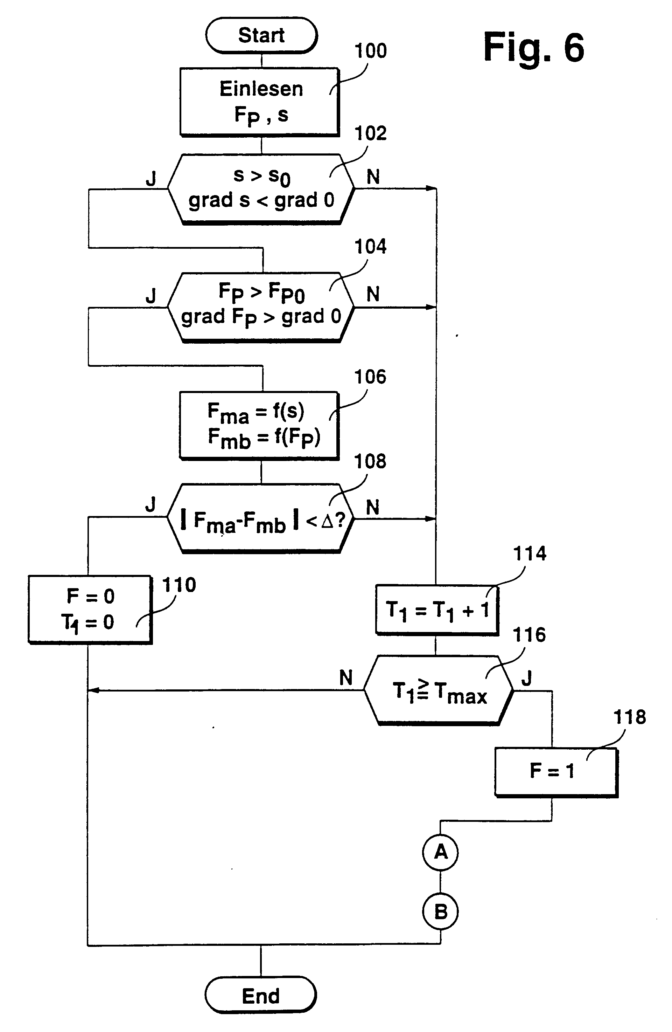

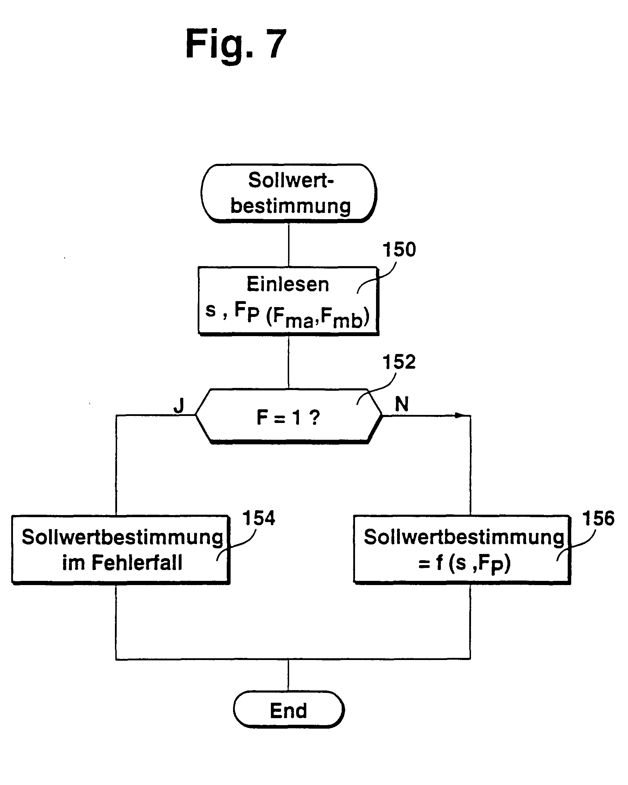

Figur 6 zeigt ein Flußdiagramm zur Fehlererkennung. Nach Start des Programmteils zu vorgegebenen Zeitpunkten werden im ersten Schritt 100 die Signale a und b, der Pedalweg s und die Pedalkraft FP eingelesen. Daraufhin wird im Schritt 102 der eingelesene Pedalweg s mit einem Signalwert sO bei nicht betätigtem Bremspedal verglichen. Ferner wird im Schritt 102 der Gradient des Pedalwegsignals mit einem Grenzwert grad0 verglichen. Der Gradient wird dabei durch Bildung der Differenz zwischen dem aktuellen und dem Meßwert des vorherigen Progammdruchlaufs ermittelt. Der Gradientengrenzwert stellt dabei die Grenze zu physikalisch im Normalbetrieb nicht möglichen oder sehr selten auftretenden Veränderungen des Signals dar. Überschreitet der Pedalweg den Wert s0 und unterschreitet sein Gradient den Grenzwert, wird mit Schritt 104 fortgefahren. Dort wird in Bezug auf das Signal b, die Pedalkraft, entsprechend vorgegangen. Überschreitet also das Pedalkraftsignal FP den Nullwert FP0 und unterschreitet der Gradient des Pedalkraftsignals den Grenzgradientenwert, so wird gemäß Schritt 106 auf der Basis der aus Figur 5 dargestellten Zusammenhänge die Bremskraft Fma abhängig vom Pedalweg s und die Bremskraft Fmb abhängig von der Pedalkraft FP ermittelt. Im darauffolgenden Abfrageschritt 108 wird der Betrag der Differenz zwischen den beiden ermittelten Bremskraftwerten mit einem vorgegebenen Toleranzwert Δ verglichen. Dieser Toleranzwert ist im bevorzugten Ausführungsbeispiel betriebspunktabhängig, das heißt abhängig vom jeweiligen Wert des Pedalwegs s und/oder der Pedalkraft FP. Ist der Betrag der Differenz innerhalb des Toleranzbereichs, wird von einer fehlerfreien Funktion der Bremswunschermittlung ausgegangen und im Schritt 110, ggf. nach Ablauf einer Filterzeit oder bei einer vorgegebenen Anzahl gleicher Ergebnisse, das Fehlerflag F sowie der Zähler T1 auf 0 gesetzt. Die Bremswunschermittlung bei Normalbetrieb wird im Programmteil nach Figur 7 dargestellt.

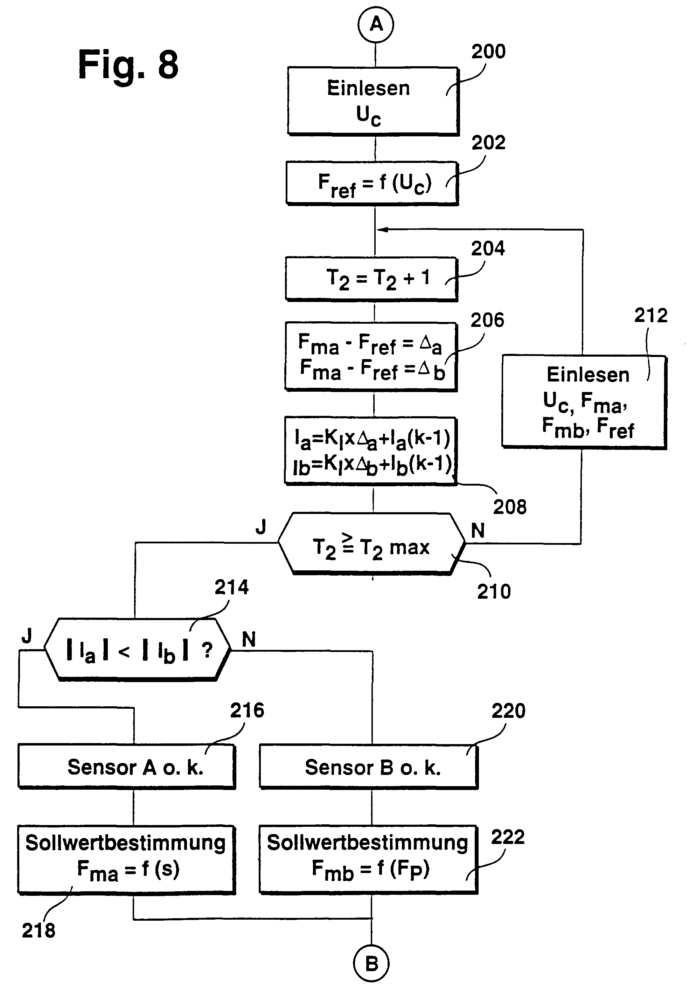

Bei negativen Antworten in den Abfrageschritten 102, 104 oder 108 wird von einem Fehler im Bereich der Pedalbetätigungserfassung ausgegangen. Dies ist dann der Fall, wenn der Pedalwegwert oder der Pedalkraftwert unterhalb ihres Nullwertes und/oder der Gradient des jeweiligen Signals größer als der jeweilige Grenzwert und/oder der Betrag der Differenz zwischen den auf der Basis der Signale ermittelten Bremskraftwerten größer als der Toleranzwert ist. In diesem Fall wird gemäß Schritt 114 ein Zähler T1 um 1 erhöht und im darauffolgenden Abfrageschritt 116 mit seinem Maximalwert Tmax verglichen. Hat der Zählerstand diesen Maximalwert nicht erreicht oder überschritten, wird die Bremswunschbestimmung wie bei korrekter Funktion durchgeführt. Solange der Fehler nicht die Zeit Tmax angedauert hat, wird von einem sogenannten dynamischen Fehler ausgegangen. Die Berücksichtigung dieses Fehlers im Bereich der Bremswunschbestimmung spielt vor dem Hintergrund der Trägheit der Bremsanlage keine Rolle. Im Gegensatz dazu wird von einem statischen Fehler ausgegangen, wenn der Zählerstand den Maximalwert erreicht bzw. überschritten hat. In diesem Fall wird das Fehlerflag F gemäß Schritt 118 auf den Wert 1 gesetzt. Daraufhin werden Maßnahmen zur Lokalisierung des Fehlers eingeleitet. Diese Maßnahmen werden im folgenden anhand der Figuren 8 bis 12 näher beschrieben. Die Bremswunschermittlung im Fehlerfall ist ebenfalls anhand des Flußdiagramm nach Figur 7 dargestellt.

In der Regel weisen die beiden Signale a und b unterschiedliches dynamisches Verhalten auf. Um dies zu berücksichtigen, ist ein Anpassungsfilter vorgesehen, welches als digitales Verzögerungsglied den dynamisch schnelleren Meßwert gegenüber dem anderen derart verzögert, daß bei der Vergleichsrechnung dem Schritt 108 beide Signale den gleichen Zeitpunkt repräsentieren.

Eine bevorzugte Vorgehensweise zur Bremswunsch- bzw. Sollwertermittlung ist in Figur 7 dargestellt. Nach Start des Programmteils zu vorgegebenen Zeitpunkten werden im ersten Schritt 150 Pedalweg s und Pedalkraft FP bzw. die entsprechenden Bremskraftwerte Fma und Fmb, ggf. bereits als Ergebnis der oben dargestellten Auswahl in den Mikrorechner 100 und 102 eingelesen. Danach wird im Schritt 152 überprüft, ob das Fehlerflag gesetzt ist. Ist dies der Fall, wird nach Schritt 154 die Bremswunsch- bzw. Sollwertermittlung im Fehlerfall auf der Basis des als fehlerfrei ermittelten Signalwerts bzw. Bremskraftwerts bestimmt. Bei korrekter Funktion, wird nach Schritt 156 der Bremswunsch bzw. Sollwert auf der Basis der ermittelten Bremskraftwerte Fma und Fmb bzw. der Signalwerte s und FP bestimmt. Dies erfolgt im bevorzugten Ausführungsbeispiel nach einer Mittelwertbildung. In anderen vorteilhaften Ausführungsbeispielen kann eine Minimal- oder Maximalwertauswahl oder in verschiedenen Betriebsbereichen jeweils einer der Werte der Bremswunschermittlung zugrunde liegen. Nach Schritt 154 oder 156 ist der Programmteil beendet.

Zur Lokalisierung des fehlerhaften Signals dient die Überwachungskomponente 20. Sie enthält in einer bevorzugten Realisierungsform einen zusätzlichen unabhängigen Sensor zur Messung einer für die Pedalbetätigung repräsentativen Größe (z.B. Pedalweg s oder Pedalkraft FP). Diese Messung kann mit reduzierter Genauigkeit im Vergleich zur Genauigkeit der Meßeinrichtungen 14 und 18 erfolgen. Die aus der Meßgröße c ermittelte Bremskraft Fm wird lediglich bei nicht konsistenten Meßgrößen a und b zur Detektion des fehlerfrei arbeitenden Meßeinrichtung bei Auftreten eines statischen Fehlers verwendet.

Eine erste bevorzugte Realisierung zur Lokalisierung des Fehlers ist anhand des Flußdiagramms nach Figur 8 dargestellt. Dazu wird aus dem Meßwert c der Überwachungskomponente eine Referenzgröße Fref für die gewünschte Bremskraft Fm berechnet. Durch Integration der Differenzsignale Fma minus Fref bzw. Fmb minus Fref über ein vorgebbares Zeitintervall wird die fehlerfreie Meßeinrichtung durch Auswahl des kleineren Integralbetrags ermittelt.

Dazu wird im ersten Schritt 200 der Meßwert UC eingelesen und im darauffolgenden Schritt 202 der Referenzwert Fref auf der Basis eines wie in Figur 5 dargestellten Zusammenhangs aus dem Signal UC bestimmt. Im darauffolgenden Schritt 204 wird ein Zähler T2, der mit Aktivierung des Programmteils zu Null gesetzt wird, um 1 erhöht. Im darauffolgenden Schritt 206 wird eine erste Differenz Δa zwischen Bremskraftwert Fma und Referenzwert Fref sowie eine zweite Differenz Δb aus Bremskraftwert Fmb und Referenzwert Fref gebildet. Daraufhin wird im Schritt 208 die Differenz über die Zeit integriert. Es werden zwei Integratorwerte Ia und Ib jeweils abhängig von der zugehörigen Differenz Δa bzw. Ab gebildet. Im darauffolgenden Abfrageschritt 210 wird überprüft, ob der Zählerstand T2 seinen Maximalwert T2max erreicht hat. Ist dies nicht der Fall, werden im Schritt 212 der Meßwert UC sowie die aus den Meßwerten s und FP abgeleiteten Bremskraftwerte Fma und Fmb eingelesen, der Referenzwert Fref gebildet und der Programmteil mit Schritt 204 wiederholt. Wurde im Schritt 210 festgestellt, daß der Zählerstand T2 seinen Maximalwert erreicht hat, so werden im Abfrageschritt 214 die Beträge der Integratorwerte Ia und Ib miteinander verglichen. Ist der Betrag Ia kleiner als der Wert Ib, so wird im Schritt 216 die Meßeinrichtung 14 als funktionstüchtig angenommen und gemäß Schritt 218 der Wert Fma der Bremswunschbestimmung nach Figur 7 zugrundegelegt. Im anderen Fall wird gemäß Schritt 220 die Meßeinrichtung 18 als funktionstüchtig erkannt und dementsprechend gemäß Schritt 222 der Bremskraftwert Fmb der Bremswunschbestimmung zugrundegelegt.

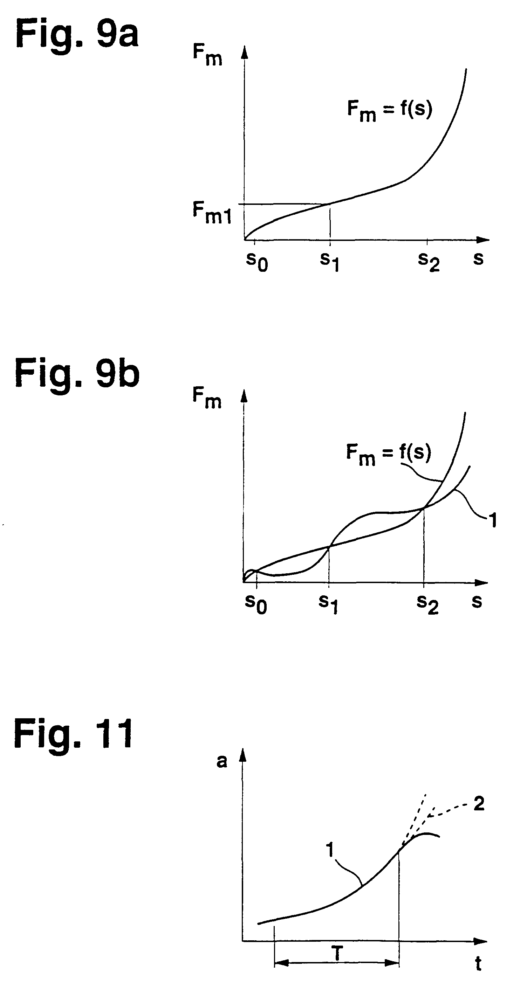

Im vorstehend beschriebenen Ausführungsbeispiel ermittelt die Überwachungskomponente die Pedalbetätigung kontinuierlich. In einem anderen vorteilhaften Ausführungsbeispiel enthält die Überwachungskomponente einen Satz binärer Kontakte, die über den Meßbereich der Meßgröße geeignet verteilt angeordnet sind. Diese Kontakte ändern bei Überschreiten des zugeordneten Signalwerts ihren logischen Zustand. Gemäß Figur 9a sei die Anzahl der binären Kontakte 3. Ihre Funktion wird bei jedem Bremsvorgang durch Überprüfen der korrekten logischen und zeitlichen Reihenfolge der Schaltvorgänge überwacht. In Figur 9a sind die binären Kontakte dem Pedalweg s zugeordnet. Dies hat sich in einem Ausführungsbeispiel als geeignet erwiesen. Das aus der Pedalstellung s0 abgeleitete Binärsignal repräsentiert dabei den Bremslichtkontakt. Bei nicht konsistenten Meßsignalen a und b dienen diese binären Größen zur Lokalisierung des Fehlers. Dies geschieht durch Vergleich der jeweiligen Bremskräfte mit derjenigen Bremskraft, die einer bestimmten Schalterstellung zugeordnet ist (Beispiel Fm1 in Figur 9a). Dieser Vergleich kann allerdings lediglich in den Kontaktpositionen durchgeführt werden. In Figur 9b stimmen in den Kontaktpositionen die korrekte Kennlinie Fm und die fehlerhafte Kennlinie 1 überein. Treten Fehler auf, die sich nicht an den Positionen der Schaltkontakte, sondern ausschließlich in den Zwischenintervallen bemerkbar machen, kann der fehlerhafte Kanal auf die obendargestellte Weise nicht detektiert werden. Daher wird im Intervall zwischen zwei Binärkontakten ein Ersatzwert für die Bremskraft vorgegeben. Oberhalb des dem größten Positionswert zugeordneten Kontaktes wird ein anderer Ersatzwert vorgegeben.

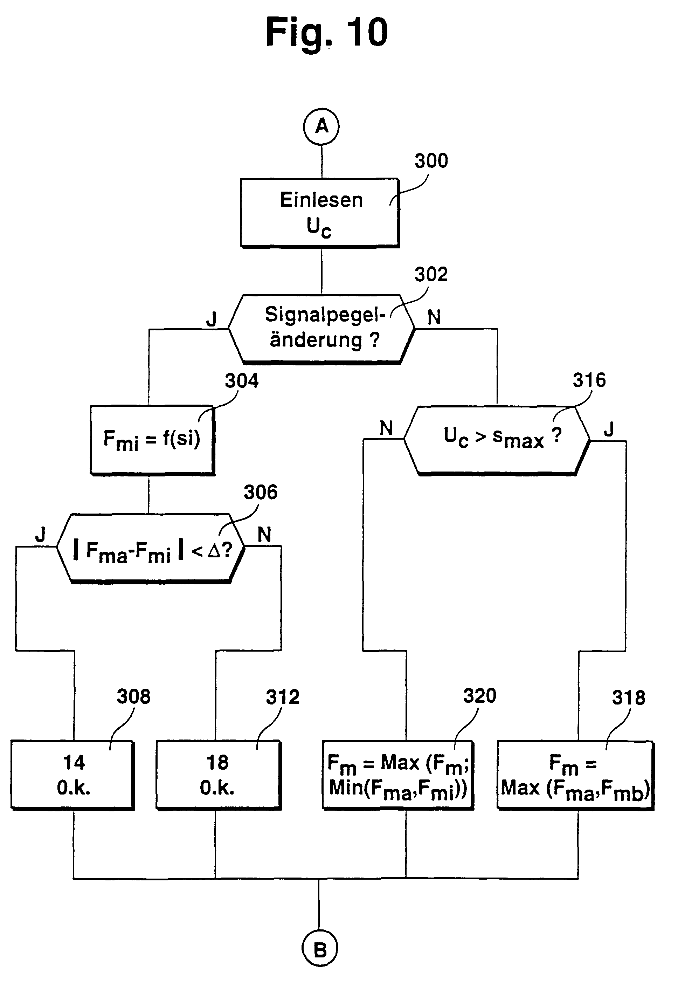

Ein Beispiel einer entsprechenden Vorgehensweise ist in Figur 10 anhand eines Flußdiagramms dargestellt. Im ersten Schritt 300 wird der logische Zustand der Überwachungskomponente UC eingelesen. Im darauffolgenden Abfrageschritt 302 wird bei einer Änderung des Signalpegels zum Schritt 304 verzweigt. Dort wird der dem aktuellen Kontaktpunkt Si zugeordnete Bremskraftwert Fmi bestimmt und im darauffolgenden Abfrageschritt 306 die Differenz zwischen einem der Bremskraftwerte Fma bzw. Fmb und dem ermittelten Wert Fmi gebildet. Diese Differenz bzw. deren Betrag wird mit einem vorgegebenen Toleranzbereich Δ verglichen, der vorzugsweise betriebspunktabhängig ist. Ergab der Vergleich des Bremskraftswert Fma mit dem Bremskraftwert Fmi, daß der Betrag der Differenz kleiner als der Toleranzbereich ist, so wird im Schritt 308 die Meßeinrichtung 14 als funktionsfähig anerkannt und die Bremswunschermittlung auf der Basis des Wertes Fma durchgeführt, während im gegenteiligen Fall gemäß Schritt 312 die Meßeinrichtung 18 als funktionstüchtig erkannt wurde und die Bremswunschermittlung auf der Basis des Meßwertes Fmb erfolgt. Wurde im Schritt 302 keine Signalpegeländerung erkannt, so wird im darauffolgenden Schritt 316 überprüft, ob die Pedalbetätigung über den letzten Überwachungskontakt hinaus erfolgt ist. Ist dies der Fall, wird gemäß Schritt 318 der der Bremswunschermittlung zugrundeliegende Kraftwert Fm aus dem Maximalwert der Bremskraftwerte Fma und Fmb bestimmt (Fm = MAX {Fma, Fmb}). Wurde im Schritt 316 erkannt, daß sich die Pedalbetätigung zwischen zwei Kontakten bewegt, wird gemäß Schritt 320 der Bremswunschermittlung der Maximalwert aus der dem nächsten Kontakt in Richtung losgelassenem Bremspedal zugeordneten Bremskraftwert Fmi und dem Minimalwert aus den ermittelten Bremskraftwerten Fma und Fmb zugrunde gelegt (Fm = MAX{Fmi, MIN{Fma, Fmb}}).

Die Bildung eines Ersatzwertes außerhalb der Kontaktpositionen wird in einem anderen vorteilhaften Ausführungsbeispiel mit lediglich zwei Meßrichtungen ohne Überwachungskomponente bei nicht lokalisierbarem Fehlerzustand in entsprechender Weise angewendet. Dabei wird auf der Basis eines Signals (Fma oder Fmb) die jeweilige Formel zur Bestimmung des Ersatzwertes ausgewählt.

Neben dem im Schritt 306 dargestellten Vergleich mit dem Wert Fma kann in analoger Weise auch der Wert Fmb herangezogen werden.

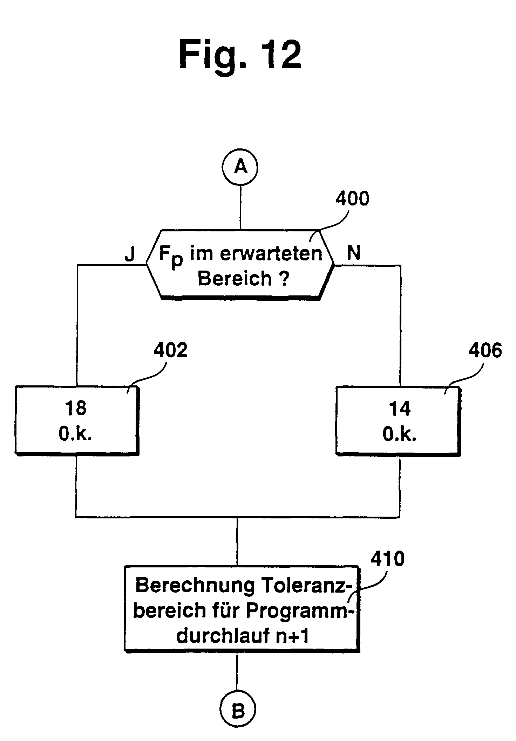

Ein drittes vorteilhaftes Ausführungsbeispiel zur Lokalisierung des Fehlers wird anhand der Figuren 11 und 12 dargestellt. Bei diesem Ausführungsbeispiel wird durch mathematische Modelle für das dynamische Verhalten der Signale ein Toleranzbereich für den prognostizierten Signalverlauf auf der Basis von zurückliegenden Meßdaten vorgegeben. Überschreitet der gemessene Signalverlauf diesen Toleranzbereich, so wird ein Fehlverhalten des entsprechenden Signals erkannt. Im einfachsten Fall wird zur Kurzzeitprognose des Signalverlaufs in jedem Programmdurchlauf der zu erwartende Signalwert auf der Basis des aktuellen und des im vorherigen Programmdurchlauf ermittelten Wertes errechnet, vorzugsweise durch Geradenextrapolation. Um den neuen Signalwert wird ein vorgegebener, vorzugsweise betriebspunktabhängiger Toleranzbereich gelegt, der im darauffolgenden Programmdurchlauf der Fehlererkennung zugrundegelegt wird. In Figur 11 ist am Beispiel des zeitlichen Verlaufs der Signalgröße a diese Methode skizziert. Der gemessene Signalverlauf 1 dient zum Zeitpunkt am Ende der Periode T zur Bestimmung des Toleranzbereichs 2 für den prognostizierten Signalverlauf. Weicht der gemessene Signalverlauf 1 zum auf den Bereich T folgenden nächsten Zeitpunkt vom Toleranzbereich ab, wird ein Fehlerverhalten des entsprechenden Kanals erkannt.

Eine entsprechende Vorgehensweise wird anhand des Flußdiagramms nach Figur 12 dargestellt. Im ersten Abfrageschritt 400 wird überprüft, ob beispielsweise das Pedalkraftsignal FP im erwarteten Toleranzbereich bezüglich der Meßeinrichtung 18 liegt. Ist dies der Fall, wird die Meßeinrichtung 18 als fehlerfrei erkannt (Schritt 402) und der Bremswunschberechnung der Wert Fmb zugrundegelegt. Befindet sich der Pedalkraftwert nicht im erwarteten Bereich, so wird gemäß Schritt 406 die Meßeinrichtung 14 als fehlerfrei erkannt und der Bremswunschermittlung der Meßwert Fma zugrundegelegt. Nach den Schritten 404 und 408 wird im Schritt 410 der Toleranzbereich für den prognostizierten Signalverlauf für den nächsten Programmdurchlauf errechnet. Der Fehlererkennung liegt in einem anderem vorteilhaften Ausführungsbeispiel der Pedalweg s zugrunde.

## Patentansprüche

1. Verfahren zur Steuerung bzw. Regelung der Bremsanlage eines Fahrzeugs,
- wobei wenigstens zwei unterschiedliche, die Bremspedalbetätigung durch den Fahrer repräsentierende Größen ermittelt werden, aus denen in einem Rechnersystem (26) der Bremswunsch des Fahrers ermittelt wird, dieser Bremswunsch in Sollwerte für die Radbremsen umgesetzt wird und die Radbremsen auf der Basis der Sollwerte gesteuert bzw. geregelt werden,
- wobei der Bremswunsch aus den wenigstens zwei Betätigungsgrößen nach Maßgabe von vorgegebenen Zusammenhängen zwischen dem Bremswunsch und den ermittelten Betätigungsgrößen in wenigstens zwei Verarbeitungskanälen gebildet wird,
dadurch gekennzeichnet, daß
- das Rechnersystems (26) wenigstens zwei Mikrorechner aufweist, welchen die Betätigungsgrößen zugeführt werden,
- wobei in einem Mikrorechner der Bremswunsch und/oder die Sollwerte aus den Betätigungssignalen ermittelt wird, in wenigstens einem weiteren der Mikrorechner die Berechnungen zur Bremswunsch- und/oder Sollwertermittlung redundant in zwei voneinander unabhängigen Softwarekanälen errechnet wird,
- und aus den Ergebnissen Bremswunsch und/oder Sollwerte zur Steuerung der Radbremsen gebildet werden.

2. Verfahren nach Anspruch 1, dadurch gekennzeichnet, daß die gebildeten Bremswunschgrößen miteinander verglichen werden und bei unzulässigen Abweichungen ein Fehlerzustand erkannt wird.

3. Verfahren nach einem der vorhergehenden Ansprüche, dadurch gekennzeichnet, daß als Bremswunsch eine die Bremskraft repräsentierende Größe ermittelt wird.

4. Verfahren nach einem der Ansprüche, dadurch gekennzeichnet, daß die erste Betätigungsgröße die Pedalbetätigungskraft, die zweite der Pedalweg ist.

5. Verfahren nach einem der vorhergehenden-Ansprüche, dadurch gekennzeichnet, eine weitere unabhängige Betätigungsgröße als Überwachungskomponente vorgesehen ist, aus der im Fehlerfall der Fehlerzustand lokalisiert wird.

6. Verfahren nach Anspruch 5, dadurch gekennzeichnet, daß die Überwachungskomponente kontinuierlich die Bremspedalbetätigung erfaßt und aus deren Signal eine Referenzgröße für den Bremswunsch gebildet wird, wobei zur Fehlerlokalisierung die Differenz zwischen dieser Referenzgröße und den auf der Basis der Signale der Meßeinrichtungen ermittelten Größe gebildet und über ein vorgegebenes Zeitintervall integriert wird, wobei der jeweils kleinere Integrationsbetrag das fehlerfreie Signale kennzeichnet.

7. Verfahren nach Anspruch 5, dadurch gekennzeichnet, daß die Überwachungskomponente einzelne Schaltkontakte aufweist, wobei die Fehlerlokalisierung an der Schaltposition durch Vergleich der zugehörigen Referenzgröße mit den aus den Meßsignalen abgeleiteten Größen für den Bremswunsch erfolgt.

8. Verfahren nach einem der vorhergehenden Ansprüche, dadurch gekennzeichnet, daß im Fehlerfall Ersatzwerte für den Bremswunsch ermittelt werden.

9. Verfahren nach einem der vorhergehenden Ansprüche, dadurch gekennzeichnet, daß zur Fehlerlokalisierung der Signalverlauf des jeweiligen Meßsignals prognostiziert und der Fehlerzustand erkannt wird, wenn der gemessene Signalverlauf vom prognostizierten abweicht.

10. Vorrichtung zur Steuerung bzw. Regelung der Bremsanlage eines Fahrzeugs,
- mit einer Pedalerfassungseinheit (12) zur Ermittlung der Bremspedalbetätigung durch den Fahrer, die aus wenigstens zwei Meßeinrichtungen (14, 18, 20) aufgebaut ist, welche unterschiedliche die Bremspedalbetätigung charakterisierenden Größen erfassen,
- mit wenigstens einer elektronischen Steuereinheit, welche ein Rechnersystem (26) umfaßt und welche Mittel aufweist, die aus den Bremsbetätigungssignalen den Bremswunsch und/oder Sollwerte für die Radbremsen ermitteln und die Bremsanlage steuern bzw. regeln, diese Mittel vorgegebene Zusammenhängen zwischen dem Bremswunsch und den ermittelten Betätigungsgrößen aufweisen und den Bremswunsch aus den wenigstens zwei ermittelten Betätigungsgrößen nach Maßgabe dieses Zusammenhang bilden,
dadurch gekennzeichnet, daß
- das Rechnersystems (26) wenigstens zwei Mikrorechner aufweist, welchen die Betätigungsgrößen zugeführt werden,
- wenigstens einer der Mikrorechner des Rechnersystems (26) den Bremswunsch und/oder die Sollwerte aus den Betätigungssignalen ermittelt, wenigstens ein weiterer der Mikrorechner die Berechnungen zur Bremswunsch- und/oder Sollwertermittlung redundant in zwei voneinander unabhängigen Softwarekanälen errechnet,
- das Rechnersystem aus den Ergebnissen Bremswunsch und/oder Sollwerte zur Steuerung der Radbremsen bildet.

11. Vorrichtung nach Anspruch 10, dadurch gekennzeichnet, daß die Pedalerfassungseinheit ferner eine Überwachungskomponente zur Lokalisierung des Fehlerzustandes umfaßt, die wenigstens eine elektronische Steuereinrichtung aus wenigstens zwei Mikrorechnern besteht, wobei die Signale der beiden Meßeinrichtungen jeweils den Mikrorechnern zugeführt werden, das Signal der Überwachungskomponente lediglich einem Mikrorechner zugeführt wird.

12. Vorrichtung nach Anspruch 10, dadurch gekennzeichnet, daß die Meßeinrichtungen (14, 18, 20) und/oder die die zwei Verarbeitungskanäle bildenden Mikrorechner (100, 102) aus unabhängigen Energiequellen versorgt werden.

## Claims

1. Method for the open-loop or closed-loop control of the braking system of a vehicle,
- at least two different variables which represent the brake pedal actuation by the driver being determined, from which the braking intention of the driver is determined in a computer system (26), this braking intention being converted into desired values for the wheel brakes, and the wheel brakes being subjected to open-loop or closed-loop control on the basis of the desired values,
- the braking intention being formed from the at least two actuation variables in accordance with prescribed relationships between the braking intention and the determined actuation variables in at least two processing channels,
characterized in that
- the computer system (26) has at least two microcomputers which are fed the actuation variables,
- the braking intention and/or the desired values being determined in one microcomputer from the actuation signals, and the calculations relating to the determination of the braking intention and/or desired values being carried out redundantly in two mutually independent software channels in at least one of the further microcomputers,
- and the braking intention and/or desired values for controlling the wheel brakes being formed from the results.

2. Method according to Claim 1, characterized in that the formed braking intention variables are intercompared, and an error state is detected in the case of impermissible deviations.

3. Method according to one of the preceding claims, characterized in that a variable representing the braking force is determined as braking intention.

4. Method according to one of the preceding claims, characterized in that the first actuation variable is the pedal actuation force and the second is the pedal travel.

5. Method according to one of the preceding claims, characterized in that a further independent actuation variable is provided as monitoring component from which the error state is located in the case of error.

6. Method according to Claim 5, characterized in that the monitoring component continuously detects the brake pedal actuation, and from the signal thereof a reference variable is formed for the braking intention, the difference between this reference variable and the variable determined on the basis of the signals of the measuring instruments being formed for the purpose of locating errors and being integrated over a prescribed time interval, the respective smaller absolute value of the integration characterizing the error-free signal.

7. Method according to Claim 5, characterized in that the monitoring component has individual switching contacts, the error locating being performed at the switching position by comparing the associated reference variable with the variables, derived from the measuring signals, for the braking intention.

8. Method according to one of the preceding claims, characterized in that default values are determined for the braking intention in the case of error.

9. Method according to one of the preceding claims, characterized in that for the purpose of locating errors the signal characteristic of the respective measuring signal is predicted and the error state is detected when the measured signal characteristic deviates from the predicted one.

10. Device for the open-loop or closed-loop control of the braking system of a vehicle,
- having a pedal sensing unit (12) for determining the brake pedal actuation by the driver, which is assembled from at least two measuring instruments (14, 18, 20) which sense different variables characterizing the brake pedal actuation,
- having at least one electronic control unit which comprises a computer system (26) and has means which use the brake actuation signals to determine the braking intention and/or desired values for the wheel brakes and subject the braking system to open-loop or closed-loop control, these means having prescribed relationships between the braking intention and the determined actuation variables and forming the braking intention from the at least two determined actuation variables in accordance with these relationships,
characterized in that
- the computer system (26) has at least two microcomputers which are fed the actuation variables,
- at least one of the microcomputers of the computer system (26) determines the braking intention and/or the desired values from the actuation signals, and at least one of the further microcomputers carries out the calculations relating to the braking intention and/or desired values redundantly in two mutually independent software channels,
- the computer system forms the braking intention and/or desired values from the results for the purpose of controlling the wheel brakes.

11. Device according to Claim 10, characterized in that the pedal sensing unit also comprises a monitoring component for locating the error state, which consists at least of an electronic control device composed of at least two microcomputers, the signal of the two measuring instruments respectively being fed to the microcomputers, and the signal of the monitoring component being fed only to one microcomputer.

12. Device according to Claim 10, characterized in that the measuring instruments (14, 18, 20) and/or the microcomputers (100, 102) forming the two processing channels are supplied from independent energy sources.

## Revendications

1. Procédé de commande et de régulation d'un dispositif de freinage d'un véhicule selon lequel :
- on saisit au moins deux valeurs différentes représentant l'actionnement de la pédale de frein par le conducteur, et à partir de ces valeurs un système de calculateur (26) détermine le souhait de freinage du conducteur,
- on convertit ce souhait de freinage en une valeur de consigne pour les freins de roue qui sont commandés ou régulés sur la base des valeurs de consigne,
- le souhait de freinage est formé à partir d'au moins deux valeurs d'actionnement en tenant compte de relations prédéterminées entre le souhait de freinage et les valeurs d'actionnement saisies dans au moins deux canaux de traitement,
caractérisé en ce que
- le système de calculateur (26) présente au moins deux micro-calculateurs recevant les grandeurs d'actionnement,
- un microcalculateur détermine le souhait de freinage et/ou les valeurs de consigne à partir des signaux d'actionnement et au moins un autre microcalculateur calcule le souhait de freinage et/ou valeur de consigne de manière redondante, dans deux canaux de programme indépendants,
- à partir des résultats on forme un souhait de freinage et/ou des valeurs de consigne pour la commande des freins de roue.

2. Procédé selon la revendication 1,
caractérisé en ce que
les valeurs de souhait de freinage obtenues sont comparées entre elles et en cas de divergence inacceptable on conclut à une erreur.

3. Procédé selon l'une des revendications précédentes,
caractérisé en ce qu'
on détermine en tant que souhait de freinage, une valeur représentant la force de freinage.

4. Procédé selon l'une des revendications précédentes,
caractérisé en ce que
la première valeur d'actionnement est la force d'actionnement de la pédale et la seconde la course de pédale.

5. Procédé selon l'une des revendications précédentes,
caractérisé en ce qu'
on prévoit une autre valeur d'actionnement indépendante en tant que composant de surveillance à partir de laquelle en cas d'erreur, on localise l'état d'erreur.

6. Procédé selon la revendication 5,
caractérisé en ce que
le composant de surveillance capte en continu l'actionnement de la pédale de frein et à partir de son signal on constitue une valeur de référence pour le souhait de freinage, et, pour localiser l'erreur, on calcule la différence entre cette valeur de référence et la valeur obtenue sur la base du signal fourni par le dispositif de mesure et on intègre sur un intervalle de temps prédéterminé, la plus petite intégrale caractérisant à chaque fois le signal sans erreur.

7. Procédé selon la revendication 5,
caractérisé en ce que
le composant de surveillance présente des contacts de commutation distincts, la localisation de l'erreur au point de commutation se faisant par comparaison des valeurs de référence correspondantes avec les valeurs déduites du signal de mesure pour le souhait de freinage.

8. Procédé selon l'une des revendications précédentes,
caractérisé en ce qu'
en cas d'erreur on forme des valeurs de substitution pour le souhait de freinage.

9. Procédé selon l'une des revendications précédentes,
caractérisé en ce que
pour la localisation de l'erreur, on pronostique la courbe du signal du signal de mesure correspondant et l'état d'erreur est reconnu si la courbe du signal s'écarte de la courbe pronostiquée.

10. Dispositif de commande et de régulation d'un dispositif de freinage d'un véhicule comprenant :
- un dispositif de capteur de pédale (12) pour déterminer l'actionnement de la pédale par le conducteur et constitué d'au moins deux dispositifs de mesure (14, 18, 20), captant des valeurs différentes caractérisant l'actionnement de la pédale de frein,
- au moins une unité de commande électronique, comportant un système de calculateur (26) et présentant des moyens déterminant le souhait de freinage et/ou la valeur de consigne pour les freins de roue à partir de signaux d'actionnement de frein et commandant ou réglant le dispositif de freinage, ces moyens présentant des relations prédéterminées entre le souhait de freinage et les valeurs d'actionnement déterminées, et formant le souhait de freinage à partir d'au moins deux valeurs d'actionnement déterminées selon ces relations,
caractérisé en ce que
- le système de calculateur (26) comporte au moins deux micro-calculateurs recevant les valeurs d'actionnement,
- au moins l'un des micro-calculateurs du système de calculateur (26) détermine le souhait de freinage et/ou les valeurs de consigne à partir de signaux d'actionnement,
- au moins un autre des micro-calculateurs calcule le souhait de freinage et/ou les valeurs de consigne de manière redondante dans deux canaux de programme indépendants,
- le système de calculateur construit à partir des résultats, un souhait de freinage et/ou des valeurs de consigne pour la commande des freins de roue.

11. Dispositif selon la revendication 10,
caractérisé en ce que
l'unité de détection de pédale comprend en outre un composant de surveillance pour la localisation des états d'erreur et composé d'au moins un dispositif de commande comprenant au moins deux micro-calculateurs, les signaux des deux dispositifs de mesure étant à chaque fois transmis aux micro-calculateurs, le signal des composants de surveillance étant uniquement fourni à un micro-calculateur.

12. Dispositif selon la revendication 10,
caractérisé en ce que
les dispositifs de mesure (14, 18, 20) et/ou les micro-calculateurs constituant les deux canaux de traitement (100, 102) sont alimentés par deux sources d'énergie indépendantes.
